# EUROPÄISCHE PATENTSCHRIFT

(11) **EP 2 508 274 B1**
(45) Veröffentlichungstag und Bekanntmachung des Hinweises auf die Patenterteilung: **17.07.2013**
(21) Anmeldenummer: 11002808.1
(22) Anmeldetag: 05.04.2011
(51) Int. Cl.: B21D 28/16, B21D 53/28, B21J 5/08, B21K 1/30

(54) **Verfahren und Vorrichtung zum Erhöhen des Traganteils eines Feinschneidteils mit einem Zahn, Zahnabschnitt o. dgl.**
Method and device for increasing the bearing area of a fine blanked workpiece with a tooth, a tooth section or the like
Procédé et dispositif d'augmentation de la surface de portée d'une pièce obtenue par découpage fin ayant une dent, partie dentée ou analogue

(43) Veröffentlichungstag der Anmeldung: 10.10.2012
(73) Patentinhaber: Feintool Intellectual Property AG, 3250 Lyss (CH)
(72) Erfinder: Marti, Andreas, Dipl.-Ing., 3303 Jegenstorf (CH); Schlatter, Ulrich, Dipl.-Ing., 3250 Lyss (CH)
(74) Vertreter: Hannig, Wolf-Dieter

(56) Entgegenhaltungen:
- EP-A1- 2 036 631
- WO-A1-86/00838
- AT-B- 398 543
- CH-A5- 665 367
- DE-A1- 19 604 386
- DE-A1-102009 001 305
- JP-A- 2001 259 755

## Beschreibung

Die Erfindung betrifft ein Verfahren zum Erhöhen des Traganteiles eines flachen Feinschneidteils mit einem Zahn, Zahnabschnitt o. dgl., insbesondere Parksperrklinke für Automatikgetriebe, bei dem aus einem zwischen Ober- und Unterteil eines Werkzeugs geklemmten Bandstreifen ein Zuschnitt in einer Feinschneidstufe komplett ausgeschnitten, von einem in das geöffnete Werkzeug horizontal eingefahrenen Querschieber erfasst und entgegen der Vorschubrichtung des Bandstreifens in eine Umformstufe lagegerecht verbracht wird, der Querschieber anschließend aus dem Werkzeug in seine Ausgangslage verfährt und sodann das Werkzeug schließt.

Die Erfindung betrifft weiterhin eine Vorrichtung zur Durchführung des Verfahrens aus einem ein Ober- und Unterteil umfassenden Werkzeug mit einer zum Ausschneiden eines mindestens einen Zahn aufweisenden Zuschnitts aus einem Bandstreifen vorgesehenen Feinschneidstufe, und mit einer aus einem Stauchkopf, einer plattenförmigen Fassung, Klemmplatte, einem Auswerfer und Steuerbolzen zusammengesetzten Umformstufe zum partiellen Stauchen des Zuschnitts, wobei ein Querschieber den Zuschnitt aus der Feinschneidstufe in die Umformformstufe lagegerecht verbringt.

### Stand der Technik

In der Feinschneid- und Umformtechnik werden vorwiegend Stähle verarbeitet. Dabei erstreckt sich die Vielfalt verwendeter Werkstoffe von einfachen Baustählen bis hin zu hochfesten Feinkornstählen. Die Ressource "Werkstoff" hat in den letzten Jahren stark an Bedeutung gewonnen. Mit einer optimalen Werkstoffausnutzung lassen sich die Herstellkosten eines Bauteiles wesentlich beeinflussen. Die hochfesten Stähle ermöglichen dünnwandigere Bauteile bei gleichem Festigkeitsverhalten.
In den meisten Fällen wirkt die Schnittfläche beim Feinschneiden als Funktionsfläche, weshalb der Einzug einen Kostenfaktor darstellt.

Typische Merkmale von Feinschnittteilen sind der Kanteneinzug und der Schnittgrat. Insbesondere in Eckenpartien stellt sich der Einzug ein, der mit kleiner werdendem Eckenradius und steigender Blechdicke zunimmt. Die Einzugstiefe kann rd. 30% und die Einzugsbreite etwa 40% der Blechdicke oder mehr betragen (siehe DIN 3345, Feinschneiden, Aug. 1980). Der Einzug ist damit abhängig von Materialdicke und -qualität, so dass seine Steuerung nur begrenzt möglich ist und oft eine Einschränkung der Teilefunktion, beispielsweise durch eine fehlende Scharfkantigkeit der Ecken bei Feinschneidteilen mit Zahngeometrien, wie Parksperrklinken oder durch die hervorgerufene Änderung der Funktionslänge der Teile, mit sich bringt.
Der Stanzeinzug reduziert deshalb die Teilefunktion, und zwingt den Hersteller zur Verwendung eines dickeren Ausgangsmaterials.

Es sind eine ganze Reihe von Lösungen bekannt, die versuchen, den Kanteneinzug entweder durch Nachschneiden (CH 665 367 A5) oder Nachschaben (DE 197 38 636 A1) zu beseitigen bzw. Verschieben von Material während des Schneidens (EP 1 815 922 A1), negatives Verformen (EP 2 036 631 B1) oder durch Aufdicken der Funktionsflächen zu (DE 102009001305A1) zu kompensieren.
Die bekannten Lösungen nach CH 665 367 A5 und DE 197 38 636 A1 reduzieren nicht den Kanteneinzug, sondern bearbeiten die Teile aufwändig nach, so dass einerseits erhebliche Kosten für zusätzliche Bearbeitungsvorgänge und Werkzeuge erforderlich sind, und andererseits entsprechender Materialverlust durch die Notwendigkeit des dickeren Materialeinsatzes eintritt.
Bei der bekannten Lösung gemäß EP 1 815 922 A1 wird das Werkstück in einer einstufigen Anordnung in mindestens zwei zeitlich aufeinander abfolgenden Schrittfolgen in unterschiedlichen Schnittrichtungen bearbeitet, wobei in einem ersten Schneidvorgang in vertikaler Arbeitsrichtung ein auf die Werkstückgeometrie abgestimmtes Halbfertigfabrikat mit einem geringen Einzug ausgeschnitten und in mindestens einem weiteren Schneidvorgang in entgegengesetzter Arbeitsrichtung das Teil fertiggeschnitten wird. Der Einzug des ersten Teilschritts soll dabei zumindest im Eckbereich wieder aufgefüllt werden.
Mit diesem bekannten Verfahren wird vorwiegend jedoch der vorstehende Stanzgrat vermieden und der Einzug letztendlich nicht beseitigt, sondern Materialvolumen entlang der Schnittlinie verschoben, was mit einem erhöhtem Risiko einer Rissbildung einhergeht.
Das bekannte Verfahren nach EP 2 036 631 B1 versucht den Kanteneinzug dadurch zu kompensieren, dass vor Beginn des Schnitts am eingespannten unbehandelten Bandstreifen entgegen der Schneidrichtung mit einem Vorformelement eine zur Schnittrichtung negative Verformung durchgeführt wird, die dem erwarteten Kanteneinzug beim Schneiden in die Schneidplatte in Größe und Geometrie zuzüglich einer Zugabe entspricht und ein Materialvolumen in gespiegelter Form an der Einzugsseite erzeugt.
Auch bei dem bekannte Verfahren nach DE 10 2009 001 305 A1 wird zunächst vor dem Schneiden der Randbereich eines Blechteils einer bleibenden Verformung, d.h. Stauchen, unterworfen.
Ein dem Feinschneiden vorgelagertes massives Umformen hat jedoch grundsätzlich den Nachteil, dass die Maßhaltigkeit der Fertigteile ungünstig beeinflusst werden kann. Dies bedeutet, dass die Umformvorrichtungen sehr enge Toleranzen einhalten müssen, damit eine für das Feinschneiden unabdingbare Planparallelität der gestauchten Bereiche erreicht wird.

### Aufgabenstellung

Bei diesem Stand der Technik liegt der Erfindung die Aufgabe zugrunde, den Traganteil der Funktionsflächen an einer Zahngeometrie eines feingeschnittenen Teils bei gleichzeitiger Reduzierung der Blechdicke unter Einsparung von Material und Gewährleistung wirtschaftlicher Vorteile deutlich zu erhöhen und die Maßhaltigkeit der Teile weiter zu verbessern.

Diese Aufgabe wird durch ein Verfahren der eingangs genannten Art mit den Merkmalen des Anspruches 1 und durch eine Vorrichtung mit den Merkmalen des Anspruches 7 gelöst.

Vorteilhafte Ausgestaltungen des Verfahrens und Vorrichtung sind den Unteransprüchen entnehmbar.

Grundgedanke der erfindungsgemäßen Lösung ist es, ein die Toleranzen des Materialstreifens beeinflussendes Massivumformen vor dem Feinschneiden zu vermeiden und eine Massivumformung an den Funktionsflächen der Zahngeometrie des fertiggeschnittenen Teils mit der Maßgabe einer gezielten partiellen Aufdickung durchzuführen. Dies wird durch folgende in der Umformstufe ablaufende Schritte erreicht:
a) Klemmen des Zuschnitts an seinen Flachseiten zwischen einer Klemmplatte und einem Auswerfer derart, dass der Zahn des Zuschnitts nicht eingeklemmt ist und für eine Umformoperation zugänglich bleibt,
b) Stauchen des Zahnes durch Beaufschlagen mit einer auf das Material des Zuschnitts und die Zahnform abgestimmten Stauchkraft derart, dass die Kraft horizontal zu den Flachseiten in den Kern des Zahnes durch einen Stauchkopf gelenkt wird, wobei der Zahn in einem Maß von bis zu 30% gegenüber der Ausgangsdicke des Zuschnitts symmetrisch aufgedickt wird.

Vorteilhaft ist, wenn die Stauchkraft senkrecht in die Zahnkopffläche eingeleitet wird, so dass ein gleichmäßiges und symmetrisches Fließen des Materials im Zahnbereich erfolgen kann.

In einer bevorzugten Ausgestaltung des erfindungsgemäßen Verfahrens wird der Stauchkopf mechanisch oder hydraulisch über einen Keilantrieb angetrieben. Dies ist mit dem Vorteil verbunden, dass eine flache und kompakte Bauweise der Umformstufe realisiert werden kann.

Es hat sich als zweckmäßig erwiesen, dass der Stauchgrad an den partiell aufgedickten Flächen der Zahngeometrie auf Werte zwischen 1,25 und 1,625 eingestellt wird und der Stauchkopf an die Zahnform angepasst ist. Dies gewährleistet, dass die Aufdickung weitgehend symmetrisch am Zahn stattfindet, wodurch die Dicke des Zahns gegenüber der Dicke des übrigen Zuschnitts deutlich erhöht ist und sich das Massenträgheitsmoment reduzieren lässt.

Von besonderem Vorteil ist, dass die Prozessparameter für das Stauchen, beispielsweise die Geometrie und das Werkstoffvolumen des stauchenden Bereichs, in Abhängigkeit von Materialart, Form und Geometrie des Werkstücks durch eine virtuelle Umformsimulation bestimmt werden können. Dies führt zu einer schnellen praxisnahen Auslegung der Stauchkraft.
Die Prozessparameter für das Stauchen lassen sich aber auch durch Vermessen an real hergestellten Feinschnittteilen iterativ bestimmen, ohne die Erfindung zu verlassen.

In einer weiteren bevorzugten Ausführungsform der Erfindung, insbesondere der erfindungsgemäßen Vorrichtung ist vorgesehen, dass die Fassung eine an die Form und Größe des Zuschnitts angepasste Aufnahmeöffnung aufweist, die den Zuschnitt mit Ausnahme seines Zahnes umschließt, wobei der Zuschnitt an seinen Flachseiten zwischen Klemmplatte und Auswerfer in der Aufnahmeöffnung klemmend gehalten, der Zahn jedoch ungeklemmt ist, und dass der Stauchkopf in der Umformstufe dem Zahn zugeordnet und so angeordnet ist, dass seine Stauchrichtung horizontal zu den Flachseiten senkrecht auf die Zahnkopffläche des nichtgeklemmten Zahnes hin ausgerichtet ist.

In einer weiteren zweckmäßigen Ausgestaltung der erfindungsgemäßen Vorrichtung umfasst der Stauchkopf einen Keilantrieb mit zwei gegeneinander ausgerichtete Keilflächen aufweisende Keilelemente, von denen das erste Keilelement senkrecht und von denen das zweite Keilelement senkrecht und horizontal zur Vorschubrichtung des Bandstreifens in der Umformstufe unterhalb der Matrizenebene (ME) verschieblich angeordnet ist, wobei das Keilelement den Stauchkopf trägt, der durch die Verschiebung des Keilelements entlang den Keilflächen die senkrechte Bewegung des Stauchkopfes auf die Zahnkopffläche des Zahnes zu bewirkt.

In weiterer Ausgestaltung der erfindungsgemäßen Vorrichtung weist die Umformstufe ein von der Feinschneidstufe unabhängiges mechanisches und/oder hydraulisches Antriebssystem auf.

Die erfindungsgemäße Lösung zeichnet sich dadurch aus, dass es möglich wird, Feinschneidteile an ihren Funktionsflächen gezielt und partiell aufzudicken, ohne dass die Genauigkeit der Feinschneidteile durch den Umformprozess beeinflusst wird.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen

Fig. 1 eine perspektivische Darstellung des Zuschnitts einer Parksperrklinke nach dem Stand der Technik,

Fig. 2 eine schematische Darstellung des Einzugs an einem feingeschnittenen Zahn,

Fig. 3 eine perspektivische Darstellung einer nach dem erfindungsgemäßen Verfahren hergestellten Parksperrklinke,

Fig. 4 eine schematische Darstellung der erfindungsgemäßen Vorrichtung,

Fig. 5 eine perspektivische Ansicht des in die plattenförmige Fassung eingelegten Zuschnitts mit für die Umformung frei zugänglichen Zahn und

Fig. 6 eine schematische Darstellung des Stauchkopfes mit Antrieb.

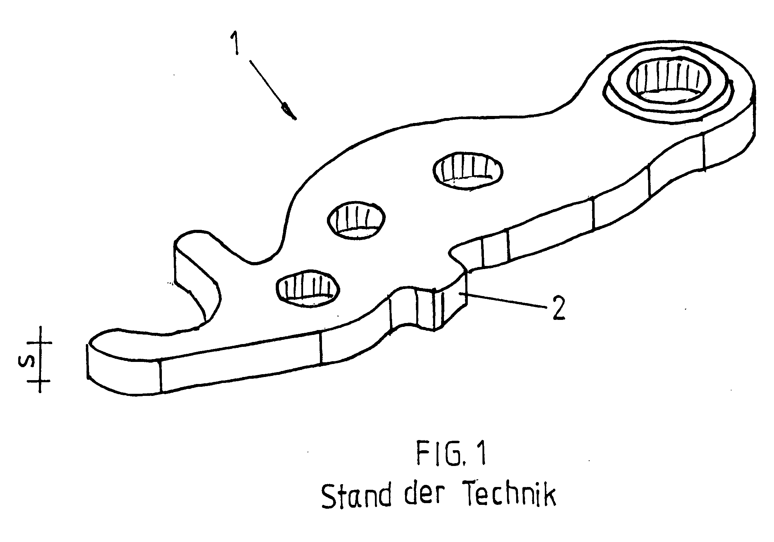

Die Fig. 1 zeigt eine feingeschnittene Parksperrklinke 1 nach dem Stand der Technik für ein Automatikgetriebe. Die Parksperrklinke 1 besitzt eine Zahngeometrie in Form eines Zahnes 2. Dieser Zahn 2 ist so ausgebildet, dass er in einen Zahnzwischenraum eines nicht dargestellten Parkzahnrades passt, wenn die Parksperrklinke 1 mit dem Parkzahnrad in Eingriff steht.
Die Parksperrklinke 1 besteht aus Einsatzstahl der Qualität 16MnCr5, hat eine Dicke s von 10 mm und ein auf den Massenschwerpunkt bezogenes Massenträgheitsmoment von 29958 kgmm² erreichen. Wie in Fig. 1 zu erkennen ist, hat die Parksperrklinke 1 als Bauteil in Breiten- und Längsrichtung eine gleichmäßige Dicke, so dass auch der Zahn 2 diese Dicke aufweist.

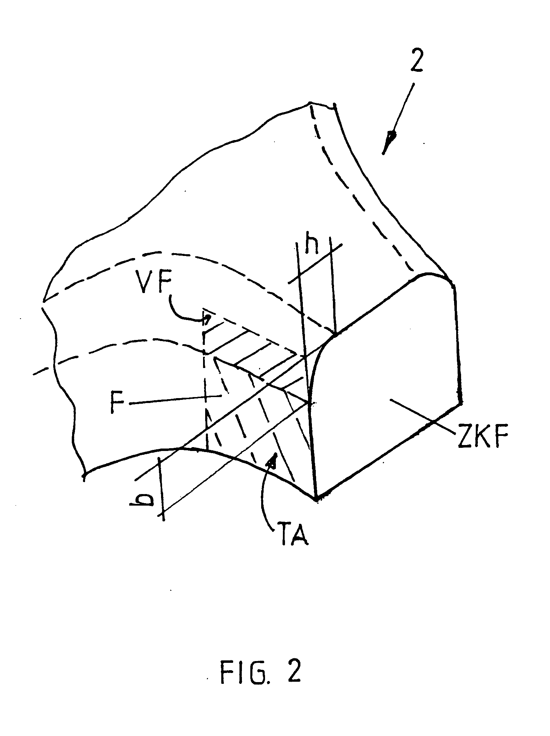

Durch den beim Feinschneiden entstehenden Einzug reduziert sich der Traganteil an den Funktionsflächen F des Zahnes 2. Mit anderen Worten wird die zur Verfügung stehende Dicke um den Betrag des Einzugs verringert, der sich aus der Höhe h und der Breite b des Einzugs ergibt. Diese Verhältnisse sind in der Fig. 2 dargestellt, in der der Traganteil TA der Funktionsfläche F schraffiert ist und die Verlustfläche mit VF bezeichnet ist.
Um zu erreichen, dass der geforderte Traganteil an den Funktionsflächen für die Übertragung der Momente zur Verfügung steht, ist es notwendig, die Ausgangsdicke des Bandmaterials entsprechend zu erhöhen. Dies führt in der Konsequenz zu einem höheren Gewicht mit allen damit einhergehenden Nachteilen für die technischen Parameter des Getriebes und der wirtschaftlichen Nachteile wie erhöhte Kosten.

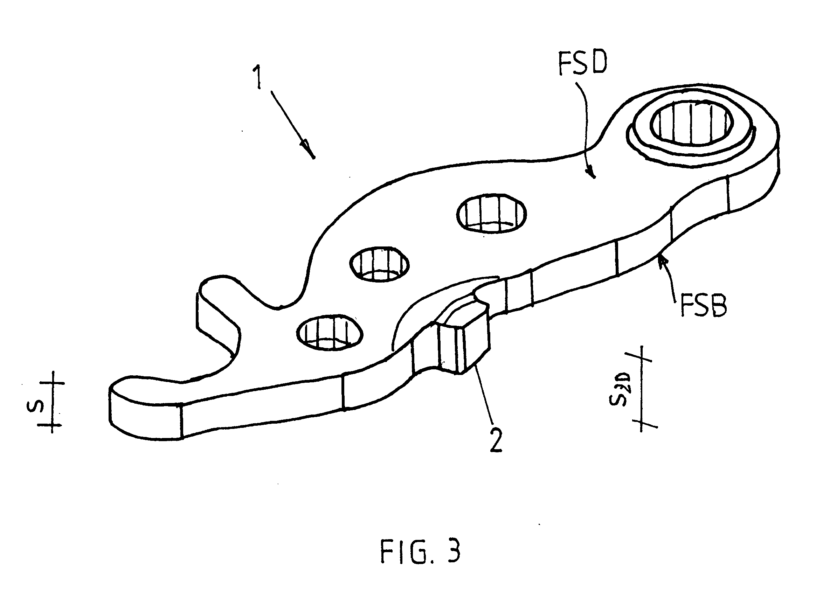

In dem vorliegenden Beispiel soll eine mit dem erfindungsgemäßen Verfahren und der erfindungsgemäßen Vorrichtung hergestellte Parksperrklinke, wie sie in Fig. 3 gezeigt ist, hergestellt werden.
Die bisher verwendeten Bezugszeichen werden in der nachfolgenden Beschreibung beibehalten.
Die Parksperrklinke 1 soll eine Dicke s von 8 mm und im Bereich des Zahnes eine Dicke s_{ZD} von 10 mm erreichen. Das Massenträgheitsmoment soll 23187 kgmm² betragen.

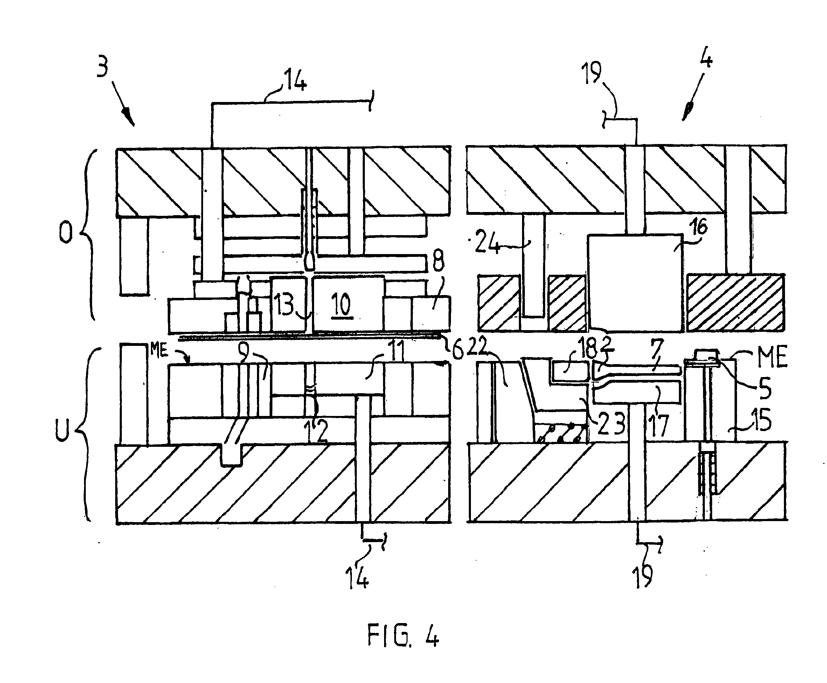

Die Fig. 4 zeigt schematisch ein Beispiel einer erfindungsgemäßen Vorrichtung, mit dem diese Parksperrklinken 1 gefertigt werden. Die erfindungsgemäße Vorrichtung umfasst eine Feinschneidstufe 3 und eine Umformstufe 4, die miteinander durch einen Querschieber 5 gekoppelt sind, der im offenen Zustand der Vorrichtung zwischen Ober- und Unterteil einfährt, die in der Feinschneidstufe 3 vollständig aus dem Bandstreifen 6 ausgeschnittenen Zuschnitte 7 erfasst und zur Umformstufe 4 verbringt. Der Querschieber 5 ist in Fig. 4 in Nichteingriffsposition gezeigt.

Die Feinschneidstufe 3 setzt sich im Wesentlichen aus einer Führungsplatte 8, einer Matrize 9, einem Schneidstempel 10, Auswerfer 11, Innenformstempel 12 und einem Ausstoßer 13 zusammen, die gemäß ihrer auszuübenden Funktion im Oberteil O bzw. Unterteil U der erfindungsgemäßen Vorrichtung angeordnet sind.
Die Führungsplatte 8, der Schneidstempel 10, der Auswerfer 11 Innenformstempel 12 und Ausstoßer 13 sind über entsprechend nicht weiter dargestellte Kolben/Zylindereinheiten mit einem hydraulischen System 14 verbunden, das die entsprechenden Druckkräfte für die Feinschneidoperationen erzeugt und auf die Wirkelemente aufbringt. Im Übrigen entspricht die Feinschneidstufe 3 dem bekannten Stand der Technik, so dass auf eine weitergehende Darstellung verzichtet werden kann.

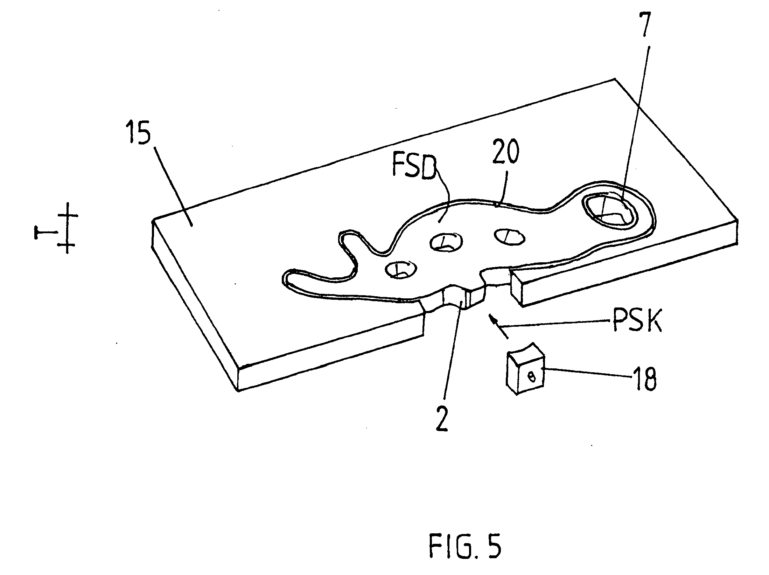

Die Umformstufe 4 umfasst im Wesentlichen eine Fassung 15 in Form einer dünnen Platte, eine als Amboss ausgebildete Druckplatte 16, einen Auswerfer 17, einen Stauchkopf 18 und einen Steuerbolzen 24. Die Druckplatte 16 und der Auswerfer 17 werden direkt und der Stauchkopf 18 indirekt über einen mechanischen Keilantrieb 21 von einer vom hydraulischen System 14 unabhängigen Zusatzhydraulik 19 angetrieben. Dabei fährt der Steuerbolzen 24 gegen das Keilelement 23, welches seinerseits den Stauchkopf 18 mit der Stauchkraft PSK gegen die Zahnkopffläche ZKF bewegt. Die Fassung 15 ist in Flucht der Matrizenebene ME der Feinschneidstufe 3 angeordnet, so dass der Querschieber 5 den Zuschnitt 7 zwischen der Feinschneidstufe 3 und der Umformstufe 4 horizontal verfahren werden kann.
Die Fassung 15 besitzt eine Aufnahmeöffnung 20, die in Größe und Form an die Kontur des Zuschnitts 7 für die Parksperrklinke 1 angepasst ist (siehe Fig. 5). Die Aufnahmeöffnung 20 ist dabei so ausgebildet, dass sie den gesamten Zuschnitt 7 bis auf den Zahn 2 aufnehmen kann. Der Zahn 2 wird somit von der Fassung 15 nicht umfasst und ist für entsprechende Umformoperationen von außen frei zugänglich.
Die Fassung 15 hat eine Dicke T, die gegenüber der Dicke s des Zuschnitts 7 geringfügig größer ist. Der vom Querschieber 5 erfasste Zuschnitt 7 wird in die Aufnahmeöffnung 20 der Fassung 15 abgelegt, so dass eine Flachseite FSB des Zuschnitts 7 plan auf dem Auswerfer 17 aufliegt und die andere Flachseite FSD der Druckplatte 16 zugewandt liegt.
Beim Schließen des Werkzeugs verfährt die Klemmplatte 16 gegen die Flachseite FSD des Zuschnitts und der Auswerfer 17 gegen die Flachseite FSD des Zuschnitts 7. Der Zuschnitt 7 ist damit zwischen Druckplatte 16 und Auswerfer 17 geklemmt in der Aufnahmeöffnung 20 der Fassung 15 gehalten. Die von der hydraulischen Zusatzhydraulik 19 bewirkte Klemmkraft liegt unter der vom Stauchkopf 18 ausgeübten Stauchkraft PSK.

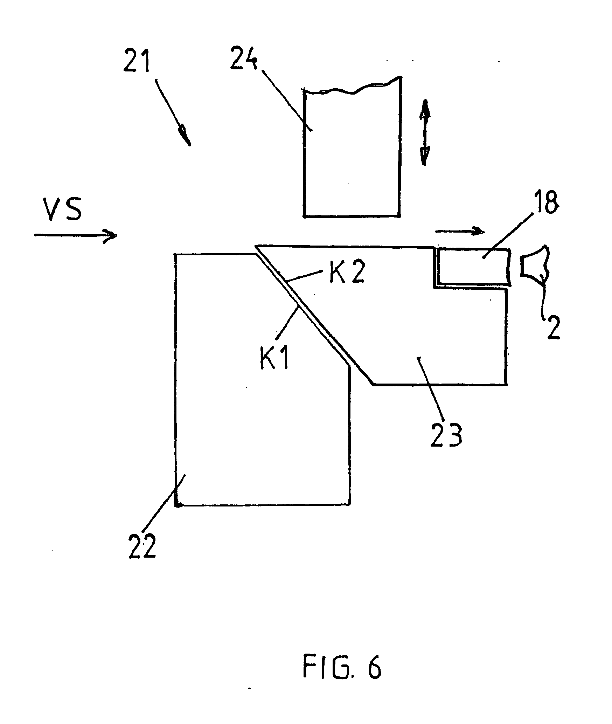

In Fig. 6 ist der Stauchkopf 18 mit seinem Keilantrieb 21 schematisch dargestellt. Der Keilantrieb 21 umfasst zwei Keilelemente 22 und 23, von denen jedes der Keilelemente 22 und 23 eine Keilfläche K1 bzw. K2 hat. An den Keilflächen K1 und K2 gegeneinander verschiebliche Keilelemente 22 und 23. Das Keilelement 22 ist unterhalb der Matrizenebene ME vertikal und das Keilelement 23 vertikal und horizontal zur Bandvorschubrichtung VS des Bandstreifens 6 verschieblich angeordnet. Die Verschiebung des Keilelements 23 wird dadurch bewirkt, dass der Steuerbolzen 24 gegen das Keilelement 23 fährt, wodurch sich die Keilfläche K2 entlang der Keilfläche K1 bewegt und der vom Keilelement 23 getragene Stauchkopf 18 in Richtung des zur Umformung frei liegenden Zahnes 2 bewegt.
Der Stauchkopf 18 ist dabei mit seiner Stauchrichtung parallel zu den Flachseiten FSB und FSD des eingeklemmten Zuschnitts 7 und senkrecht in Bezug auf die Zahnkopffläche ZKF des frei liegenden Zahnes 2 ausgerichtet, wodurch die Stauchkraft PSK gleichmäßig in den Kern des Zahns 2 gelenkt wird und das Material im Zahn 2 zum Fließen bringt. Es entsteht eine symmetrische Aufdickung der gesamten Zahngeometrie, d.h. an den Flachseiten des Zahns 2 genauso wie an den Funktionsflächen, wodurch eine gezielte Erhöhung des Traganteils an den Funktionsflächen des Zahns 2 möglich wird.

Das erfindungsgemäße Verfahren läuft wie folgt ab. Der in der Feinschneidstufe 3 ausgeschnittene Zuschnitt 7 wird bis auf seinen Zahn 2 in der Umformstufe 3 an seinen Flachseiten zwischen der als Amboss ausgebildeten Druckplatte 16 und dem Auswerfer 17 geklemmt und im geklemmten Zustand in der Aufnahmeöffnung 20 der Fassung 15 gehalten. Der Zahn 2 wird nicht geklemmt und bleibt in einer unterhalb der Matrizenebene ME angeordneten Ebene für eine Umformoperation frei zugänglich.
Die Klemmkraft PK ist so bemessen, dass der Zuschnitt 7 ohne Zahn 2 seine aus der durch die Feinschneidoperation erhaltene Gestalt und Form beibehält und eine Umformung im geklemmten Bereich des Zuschnitts 7 verhindert wird.
Der frei zugängliche Zahn 2 wird im nächsten Verfahrensschritt durch Beaufschlagen mit einer auf das Material und der Zahngeometrie eingestellten Kraft derart gestaucht, dass die Stauchkraft PSK senkrecht auf die Zahnkopffläche ZKF und parallel zu den Flachseiten des Zuschnitts 7 in den Kern des Zahns 2 durch den Stauchkopf 18 gelenkt wird. Dazu wird der Stauchkopf 18 durch seinen Keilantrieb 21 in der im Abschnitt [0030] beschriebenen Weise gegen den Zahn 2 bewegt und eine partielle Aufdickung des Zahns 2 erzeugt.
Mit dem erfindungsgemäßen Verfahren lassen sich problemlos partielle Aufdickungen in einem Maß von bis zu 30% gegenüber dem Ausgangsmaß erreichen, so dass die Gewichtsersparnisse erhebliche Größenordnungen annehmen. Die erzielten partiellen Stauchgrade im Zahnbereich liegen im Bereich von 1,25 bis 1,625.

### Bezugszeichenliste

- Parksperrklinke: 1
- Zahn: 2
- Feinschneidstufe: 3
- Umformstufe: 4
- Querschieber: 5
- Bandstreifen: 6
- Zuschnitt: 7
- Führungsplatte: 8
- Matrize: 9
- Schneidstempel: 10
- Auswerfer: 11
- Innenformstempel: 12
- Ausstoßer: 13
- Hydraulisches System: 14
- Fassung: 15
- Klemmplatte: 16
- Auswerfer von 4: 17
- Stauchkopf: 18
- Zusatzhydraulik: 19
- Aufnahmeöffnung in 15: 20
- Keilantrieb: 21
- Keilelemente: 22, 23
- Steuerbolzen für 21: 24
- Funktionsfläche am Zahn 2: F
- Flachseiten von 7: FSB, FSD
- Breite des Einzugs: b
- Höhe des Einzugs: h
- Keilflächen: K1, K2
- Matrizenebene: ME
- Oberteil: O
- Stauchkraft: PSK
- Dicke des Zuschnitts: s
- Dicke des aufgedickten Zahns: s_{ZD}
- Dicke der Fassung 15: T
- Traganteil an F: TA
- Unterteil: U
- Verlustfläche: VF
- Vorschubrichtung von 6: VS
- Zahnkopffläche: ZKF

## Patentansprüche

1. Verfahren zum Erhöhen des Traganteiles eines flachen Feinschneidteils mit einem Zahn, Zahnabschnitts o. dgl., insbesondere Parksperrklinke für Automatikgetriebe, bei dem aus einem zwischen Ober- und Unterteil (O,U) eines Werkzeugs geklemmten Bandstreifen (6) ein Zuschnitt (7) in einer Feinschneidstufe (3) komplett ausgeschnitten, von einem in das geöffnete Werkzeug horizontal eingefahrenen Querschieber (5) erfasst und entgegen der Vorschubrichtung (VS) des Bandstreifens (6) in eine Umformstufe (4) lagegerecht verbracht wird, der Querschieber (5) anschließend aus dem Werkzeug in seine Ausgangslage verfährt und sodann das Werkzeug schließt,
**gekennzeichnet durch** folgende in der Umformstufe (4) ablaufende Schritte:
a) Klemmen des Zuschnitts (7) an seinen Flachseiten (FSB,FSD) zwischen einer Klemmplatte (16) und einem Auswerfer (17) derart, dass der Zahn (2) des Zuschnitts (7) nicht eingeklemmt ist und für eine Umformoperation zugänglich bleibt,
b) Stauchen des Zahnes (2) **durch** Beaufschlagen mit einer auf das Material des Zuschnitts (7) und die Zahnform abgestimmten Stauchkraft (PSK) derart, dass die Kraft horizontal zu den Flachseiten (FSB, FSD) in den Kern des Zahnes (2) **durch** einen Stauchkopf (18) gelenkt wird, wobei der Zahn (2) in einem Maß von bis zu 30% gegenüber der Ausgangsdicke des Zuschnitts (7) symmetrisch aufgedickt wird.

2. Verfahren nach Anspruch 1, **dadurch gekennzeichnet, dass** die Stauchkraft (PSK) senkrecht in die Zahnkopffläche (ZKF) eingeleitet wird.

3. Verfahren nach Anspruch 1, **dadurch gekennzeichnet, dass** das Klemmen des Zuschnitts (7) hydraulisch durchgeführt wird.

4. Verfahren nach Anspruch 1, **dadurch gekennzeichnet, dass** der Stauchkopf (18) mechanisch und/oder hydraulisch über einen Keilantrieb (21) angetrieben wird.

5. Verfahren nach Anspruch 1, **dadurch gekennzeichnet, dass** der Stauchgrad des Zahnes (2) auf Werte zwischen 1,25 bis 1,625 eingestellt wird.

6. Verfahren nach Anspruch 1, **dadurch gekennzeichnet, dass** der Stauchkopf (18) an die Zahnform angepasst ist.

7. Vorrichtung zur Durchführung des Verfahrens nach Anspruch 1, aus einem Ober- und Unterteil (O,U) umfassenden Werkzeug mit einer zum Ausschneiden eines mindestens einen Zahn (2) aufweisenden Zuschnitts (7) aus einem Bandstreifen (7) vorgesehenen Feinschneidstufe (3), und mit einer aus einem Stauchkopf (18), einer plattenförmigen Fassung (15), Klemmplatte (16), einem Auswerfer (17) und Steuerbolzen (24) zusammengesetzten Umformstufe (4) zum partiellen Stauchen des Zuschnitts (7), wobei ein Querschieber (5) den Zuschnitt (7) aus der Feinschneidstufe (3) in die Umformformstufe (4) lagegerecht verbringt, **dadurch gekennzeic hnet**, dass die Fassung (15) eine an die Form und Größe des Zuschnitts (7) angepasste seitlich offene Aufnahmeöffnung (20) aufweist, die den Zuschnitt (7) mit Ausnahme des Zahnes (2) umschließt, wobei der Zuschnitt (7) an seinen Flachseiten (FSB, FSD) zwischen Klemmplatte (16) und Auswerfer (17) in der Aufnahmeöffnung (20) klemmend gehalten, der Zahn (2) jedoch ungeklemmt ist, und dass der Stauchkopf (18) in der Umformstufe dem ungeklemmten Zahn (2) zugeordnet und so angeordnet ist, dass seine Stauchrichtung senkrecht auf die Zahnkopffläche (ZKF) horizontal zu den Flachseiten (FSB, FSD) des nichtgeklemmten Zahnes (2) hin ausgerichtet ist.

8. Vorrichtung nach Anspruch 7, **dadurch gekennzeichnet, dass** der Stauchkopf (18) einen Keilantrieb (21) mit zwei gegeneinander ausgerichtete Keilflächen (K1,K2) aufweisende Keilelemente (22,23) umfasst, von denen das erste Keilelement (22) senkrecht und von denen das zweite, Keilelement (23) senkrecht und horizontal zur Vorschubrichtung (VS) des Bandstreifens (6) in der Umformstufe (4) unterhalb der Matrizenebene (ME) verschieblich angeordnet ist, wobei das Keilelement (23) den Stauchkopf (18) trägt, der durch die Verschiebung des Keilelements (23) entlang den Keilflächen (K1, K2) die senkrechte Bewegung des Stauchkopfes (18) auf die Zahnkopffläche (ZKF) des Zahnes (2) zu bewirkt.

9. Vorrichtung nach Anspruch 7, **dadurch gekennzeichnet, dass** die Umformstufe (4) ein von der Feinschneidstufe (3) unabhängiges mechanisches und/oder hydraulisches Antriebssystem (19) aufweist.

10. Vorrichtung nach Anspruch 7, **dadurch gekennzeichnet, dass** der Stauchkopf (18) an die Geometrie des Zahns (2) angepasst ist.

## Claims

1. Method for increasing the bearing area ration of a flat fine-blanked part having a tooth, a tooth section or the like, and in particular a parking-gear pawl for automatic transmissions, in which a blank (7) is integrally cut from a flat strip (6) clamped between the upper part (O) and the lower part (U) of a tool in a fine-blanking stage (3), is captured by a cross slide (5) which is moved horizontally into the opened tool, and is carried, correctly positioned, into a forming stage (4) in a direction opposite to the feed direction (VS) of the flat strip (6), the cross slide (5) then moving out of the tool into the home position thereof, whereupon the tool closes, **characterized by** the following steps, which take place in the forming stage (4):
a) clamping the blank (7) at the flat sides (FSB, FSD) thereof between a clamping plate (16) and an ejector (17) in such a way that the tooth (2) of the blank is not clamped and remains accessible for a forming operation; and
b) upsetting the tooth (2) by application of a compressive force (PSK) suited to the material of the blank and the tooth shape, in such a way that the force is directed by an upsetting head (18), horizontal to the flat sides (FSB, FSD), into the core of the tooth (2), whereby the tooth (2) is symmetrically thickened by up to 30% relative to the starting thickness of the blank (7).

2. Method according to claim 1, **characterized in that** the compressive force (PSK) is introduced perpendicularly into the tooth tip surface (ZKF).

3. Method according to claim 1, **characterized in that** the clamping of the blank (7) is carried out hydraulically.

4. Method according to claim 1, **characterized in that** the upsetting head (18) is driven mechanically and/or hydraulically by way of a wedge drive (21).

5. Method according to claim 1, **characterized in that** the compression of the tooth (2) is established at values between 1,25 to 1,625.

6. Method according to claim 1, **characterized in that** the upsetting head (18) is matched to the tooth shape.

7. Device for carrying out the method according to claim 1 to claim 1, comprising a tool having an upper part (O) and a lower part (U), comprising a fine-blanked stage (3) provided for cutting a blank (7) having at least one tooth (2) from a flat strip (6), and comprising a forming stage (4) having an upsetting head (18), a plate-shaped holder (15), a clamping plate (16), an ejector (17) and a control pin (24) for partially upsetting the blank (7), wherein a cross slide (5) carries the blank (7), correctly positioned, out of the fine-blanking stage (3) into the forming stage (4), **characterized in that** the holder (15) has a receiving opening (20) matched to the shape and size of the blank (7), which encloses the blank (7) except for the tooth, thereof, whereby the blank (7) is held in a clamped manner at the flat sides (FSB, FSD) thereof in the receiving opening (20), between a clamping plate (16) and an ejector (17), but the tooth (2) is not clamped, and the upsetting head (18) is aligned with the non-clamped tooth (2) in the forming stage and is disposed so that the compression direction thereof is oriented horizontal to the flat sides (FSB, FSD), perpendicular to the tooth tip surface (ZKF) of the non-clamped tooth (2).

8. Device according to claim 7, **characterized in that** the upsetting head (18) comprises a wedge drive (21) having wedge elements (22,23) with opposing wedge surfaces (K1,K2), the first wedge element (22) being disposed so as to be displaceable perpendicular to the feed direction (VS) of the flat strip (6) in the forming stage (4) below the die plate (ME), and the second wedge element (23) being disposed so as to be displaceable perpendicular and horizontal thereto, wherein the wedge element (23) carries the upsetting head (18), which brings about the perpendicular motion of the upsetting head (18) onto the tooth tip surface (ZKF) of the tooth by way of the displacement of the wedge element (23) along the wedge surface (K1, K2).

9. Device according to claim 7, **characterized in that** the forming stage (4) comprises a mechanical and/or hydraulic drive system (19), which is independent of the fine-blanking stage (3).

10. Device according to claim 7, **characterized in that** the upsetting head (18) is matched to the geometry of the tooth (2)

## Revendications

1. Procédé destiné à augmenter le pourcentage de portée d'une pièce plate obtenue par découpage fin ayant une dent, une partie dentée ou analogue, en particulier un cliquet de stationnement pour transmission automatique, dans lequel un flan (7) est découpé entièrement dans une bande droite (6) serrée entre les parties supérieure et inférieure (O, U) d'un outil dans un étage de découpage fin (3), saisi par une coulisse transversale (5) rentrée horizontalement dans l'outil ouvert et transporté en position correcte, en sens inverse du sens d'avancement (VS) de la bande étroite (6), vers un étage de formage (4), la coulisse transversale (5) est ramené ensuite de l'outil dans sa position initiale puis l'outil se ferme,
**caractérisé par** les étapes suivantes qui se déroulent dans l'étage de formage (4) :
a) serrage du flan (7) sur ses côtés plats (FSB, FSD) entre une plaque de serrage (16) et un éjecteur (17), de telle sorte que la dent (2) du flan (7) ne soit pas serrée et demeure accessible pour une opération de formage,
b) refoulement de la dent (2) par application d'une force de refoulement (PSK) adaptée à la matière du flan (7) et à la forme de la dent, de telle sorte que la force soit dirigée horizontalement aux côtés plats (FSB, FSD) dans le coeur de la dent (2) par une tête de refoulement (18), la dent (2) étant symétriquement épaissie par rapport à l'épaisseur initiale du flan (7) dans une proportion allant jusqu'à 30 %.

2. Procédé selon la revendication 1, **caractérisé en ce que** la force de refoulement (PSK) est introduite verticalement dans la face de la dent (ZKF).

3. Procédé selon la revendication 1, **caractérisé en ce que** le serrage du flan (7) est effectué hydrauliquement.

4. Procédé selon la revendication 1, **caractérisé en ce que** la tête de refoulement (18) est entraînée mécaniquement et/ou hydrauliquement au moyen d'un entraînement par clavette (21).

5. Procédé selon la revendication 1, **caractérisé en ce que** le degré de refoulement de la dent (2) est réglé sur des valeurs comprises entre 1,25 et 1,625.

6. Procédé selon la revendication 1, **caractérisé en ce que** la tête de refoulement (18) est adaptée à la forme de la dent.

7. Dispositif destiné à la mise en oeuvre du procédé selon la revendication 1, formé d'un outil comprenant une partie supérieure et une partie inférieure (O, U) avec un étage de découpage fin (3) prévu pour découper dans une bande droite (7) un flan (7) ayant au moins une dent (2), et avec un étage de formage (4) pour le refoulement partiel du flan (7), composé d'une tête de refoulement (18), d'un châssis-support en forme de plaque (15), d'une plaque de serrage (16), d'un éjecteur (17) et d'un goujon de guidage (24), une coulisse transversale (5) transportant le flan (7) en position correcte de l'étage de découpage fin (3) vers l'étage de formage (4), **caractérisé en ce que** le châssis-support (15) comporte une ouverture de réception (20) ouverte sur le côté, adaptée à la forme et aux dimensions du flan (7) et qui enveloppe le flan à l'exception de la dent (2), le flan (7) étant maintenu serré sur ses côtés plats (FSB, FSD) entre plaque de serrage (16) et éjecteur (17) dans l'ouverture de réception (20), tandis que la dent (2) n'est pas serrée, et **en ce que** la tête de refoulement (18) est associée à la dent (2) non serrée dans l'étage de formage et est disposée de telle sorte que le sens de refoulement est dirigé verticalement sur la face de la dent (ZKF), horizontalement, aux côtés plats (FSB, FSD) de la dent (2) non serrée.

8. Dispositif selon la revendication 7, **caractérisé en ce que** la tête de refoulement (18) comprend un entraînement par clavette (21) comportant deux éléments de clavette (22, 23) ayant des faces de clavette (K1, K2) dirigées l'une contre l'autre, dont le premier élément de clavette (22) est disposé de manière déplaçable verticalement, le deuxième élément de clavette (23) verticalement et horizontalement au sens d'avancement (VS) de la bande droite (6) dans l'étage de formage (4) au-dessous du plan de matrice (ME), l'élément de clavette (23) portant la tête de refoulement (18) qui produit le mouvement vertical de la tête de refoulement (18) sur la face (ZKF) de la dent (2) par le déplacement de l'élément de clavette (23) le long des faces de clavette (K1, K2).

9. Dispositif selon la revendication 7, **caractérisé en ce que** l'étage de formage (4) comporte un système d'entraînement (19) mécanique et/ou hydraulique, indépendant de l'étage de découpage fin (3).

10. Dispositif selon la revendication 7, **caractérisé en ce que** la tête de refoulement (18) est adaptée à la géométrie de la dent (2).
